# EUROPÄISCHE PATENTSCHRIFT

(11) **EP 2 858 940 B1**
(45) Veröffentlichungstag und Bekanntmachung des Hinweises auf die Patenterteilung: **25.05.2016**
(21) Anmeldenummer: 13727222.5
(22) Anmeldetag: 07.06.2013
(51) Int. Cl.: B66D 5/26, B60T 11/24, B60T 13/14

(54) **SCHEIBENBREMSANLAGE**
DISK BRAKE SYSTEM
SYSTÈME DE FREINAGE À DISQUES

(30) Priorität: 08.06.2012 DE 102012011539
(43) Veröffentlichungstag der Anmeldung: 15.04.2015
(73) Patentinhaber: Siemag Tecberg GmbH, 35708 Haiger (DE)
(72) Erfinder: SCHUBERT, Wolfgang, 35708 Haiger (DE); HOFMANN, Klaus, 35708 Haiger (DE)
(74) Vertreter: Sonnenberg, Fred
(86) Internationale Anmeldenummer: PCT/EP2013/061830
(87) Internationale Veröffentlichungsnummer: WO 2013/182691

(56) Entgegenhaltungen:
- DE-B- 1 268 342
- DE-B3-102008 056 022
- DE-U1-202012 101 654
- US-A1- 2012 073 909

## Beschreibung

Die vorliegende Erfindung bezieht sich auf Scheibenbremsanlagen für Fördermaschinen und Förderhaspel, mit Hydraulikaggregat und zugehöriger Steuerung, wie durch den Oberbegriff des unabhängigen Patentanspruches beschrieben.

Es existieren diverse bauartzugelassene Scheibenbremsanlagen bestehend aus Hydraulikaggregat und zugehöriger Sfeuerung. Die DE 1 268 342 offenbart eine solche Scheibenbremsanlage. Eine derartige Bremse weißt an die Fördermaschine angepassten Bremsständer auf, die mit in der Regel ebenso bauartzugelassen Bremselementen ausgerüstet sind. Die Bremskraft wird durch vorgespannte Federn erzeugt und hydraulisch gelüftet, wobei der Luftspalt leicht nachzustellen ist.

Die zugehörige elektrische Bremsensteuerung mit elektronischer Regelung ist ein in sich geschlossenes System, unabhängig von anderen Steuerungen der Förderanlage.

Die auf die jeweilige Fördermaschine oder Förderhaspel abgestimmten Komponenten garantieren im System ein sicheres Bremsen, sowohl im Normalbetrieb als auch bei einer Sicherheitsbremsung. Das Einleiten der Bremskraft erfolgt kontrolliert zur Schonung der Fördereinrichtungen und zur Verhinderung von Seilrutsch bei Koepe-Förderanlagen.

Benannt ist bisher auch, dass man mit zwei separaten, aktiven Bremsaggregaten je einen Bremskreis oder eine Bremsscheibe bremst, jedoch mit geregelten Bremsen, die bei einer Störung der Regelung auf eine "konstante Bremskraft" umschalten, die durch ein Speicher mit einem definierten Restdruck aufgebaut und gehalten wird.

Die Verzögerung der Anlage ist bei Ausfall der Regelung somit abhängig von Lastrichtung, etc. und nicht mehr konstant und kann unter Umständen anlagenbedingt zu Seilrutsch bei Koepemaschinen führen.

Bekannt sind auch zwei-oder mehrkanalige Bremsanlagen ohne Redundanz in den einzelnen Kanälen.

Um diese Probleme zu umgehen wurde eine Version einer Bremse vorgeschlagen, die zwei redundante Regelkreise für alle Bremsständer/-elemente einer Anlage aufweist, die den Druck bei Sicherheitsbremsung so einstellt, dass die Maschine mit einer vorgegebenen Verzögerung (z.B. 1,5 m/s²) zum Stehen kommt und zwar unabhängig vom Betriebszustand der Anlage, d.h. Nutzlast aufwärts, Fördermittel leer oder Nutzlast abwärts. Fällt ein Regelkreis aus, übernimmt der zweite Regelkreis die Regelfunktion automatisch, d.h. die Bremse ist weiterhin geregelt.

Aufgrund einiger Havarien in diesem Bereich, insbesondere im Hinblick auf die Bremsanlagen, ergibt sich ein Bedarf, diese Art von Anlagen weiterzuentwickeln, um Havarien von vornherein so weit wie möglich auszuschließen, um Mensch und Maschine abzusichern, wobei die Anlagen möglichst einfach zu realisieren, zu warten und zu bedienen sein müssen.

Diese Aufgabe wird durch eine Anlage mit den Merkmalen des unabhängigen Patentanspruches 1 gelöst, wobei zweckmäßige Ausführungsformen durch die Merkmale der Unteransprüche beschrieben sind.

Vorgesehen ist dabei eine Scheibenbremsanlage für Fördermaschinen und Förderhaspel, die mit zumindest zwei hydraulischen Bremskreisen versehen ist, wobei jedem Bremskreis zumindest eine Bremszange inkl. den Bremsbelägen zugeordnet sind, wobei pro Bremskreis der Anlage zwei redundante, aktive Regelkreise vorgesehen sind, die bei einer Sicherheitsbremsung eine konstante Verzögerung der Anlage auch bei Ausfall eines Regelkreises sicherstellen. Mit einer derartigen Anordnung wird die Sicherheit der Scheibenbremsanlage gegenüber den bekannten Systemen nochmals erhöht, da jeder einzelne Bremskreis einzeln die Maschine stillsetzen kann. Vorzugsweise sind dabei jedem Bremskreis die Hälfte der Bremszangen zugeordnet.

In einer bevorzugten Ausführungsform ist dabei vorgesehen, dass die jeweiligen Regelkreise eines Bremskreises in einer kompakten Regeleinheit, einschließlich der Druckspeicher und der dazugehörigen Überwachungs- und Steuerelektronik, zusammengefasst sind. Die Druckspeicher können dabei im Normalbetrieb auch unterstützend zum Lüften der Bremse genutzt werden, so dass der Einsatz kleinerer Pumpen möglich ist. Für die Druckerzeugung ist zumindest eine Pumpe für alle Bremskreise vorgesehen. Aus Verfügbarkeitsgründen können aber auch zwei redundante Pumpen (22, 24) installiert sein, wobei die eine Pumpe läuft und die zweite Pumpe als Stand By zum schnellen Lüften der Bremselemente und/oder Füllen der Speicher kurzzeitig unterstützend eingesetzt werden kann.

Bei einer Sicherheitsbremsung werden die Pumpen stromlos bzw. abgeschaltet, um keinen Druck mehr aufbauen zu können. Die Regelkreise regeln den Druck nach unten und legen die Bremselemente auf, bis die vorgegebene konstante Verzögerung erreicht ist. Bei zu niedrigem Druck im System wird durch die jeweiligen Druckspeicher (23, 24, 27, 29) der Druck wieder erhöht.

Ebenso bevorzugt sind alle die Regelkreise zusammenfassenden Regeleinheiten, Speicher, Pumpeneihheiten, Überwachungskomponenten, etc. auf einem Tank als Kompaktaggregat vorgesehen:

Alternativ zum Kompaktaggregat ist je Bremskreis ein Einzelaggregat mit Tank, Regeleinheiten, Speichern, Druckversorgung, Überwachung, etc. möglich.

Weiterhin bevorzugt ist, dass die Regelkreise bzw. die Regeleinheiten der jeweiligen Bremskreise miteinander koppelbar sind, vorzugsweise durch eine Kombination aus Absperreinrichtungen, so dass bei Ausfall der Regeleinheit in einem Bremskreis die Anlage allein mit den Regeleinheiten des anderen Bremskreises weiterbetrieben werden kann. In dem Fall werden alle Bremszangen von einem Bremskreis betrieben.

Des Weiteren ist bevorzugt, an jedem Bremskreis zusätzlich Ölablassventileinheiten ggfls. in Verbindung mit Druckbegrenzungsventilen, zur schrittweisen Auflegung der Bremszangen auf die Bremsscheiben, mit voller Bremskraft oder Teilbremskraft über Druckbegrenzungsventile in der Leitung zum Tank, ggf. als Backup-System, wobei die Zuordnung der Bremselemente (2, 4, 6, 8) zu den Bremskreisen beliebig sein kann.

Weitere Eigenschaften, Merkmale und Vorteile der vorliegenden Erfindung ergeben sich aus der folgenden rein illustrativen und nicht beschränkenden Beschreibung einer bevorzugten Ausführungsform einer Scheibenbremsanlage nach Maßgabe der vorliegenden Erfindung unter Bezug auf die beigefügten Zeichnungen, darin zeigt:

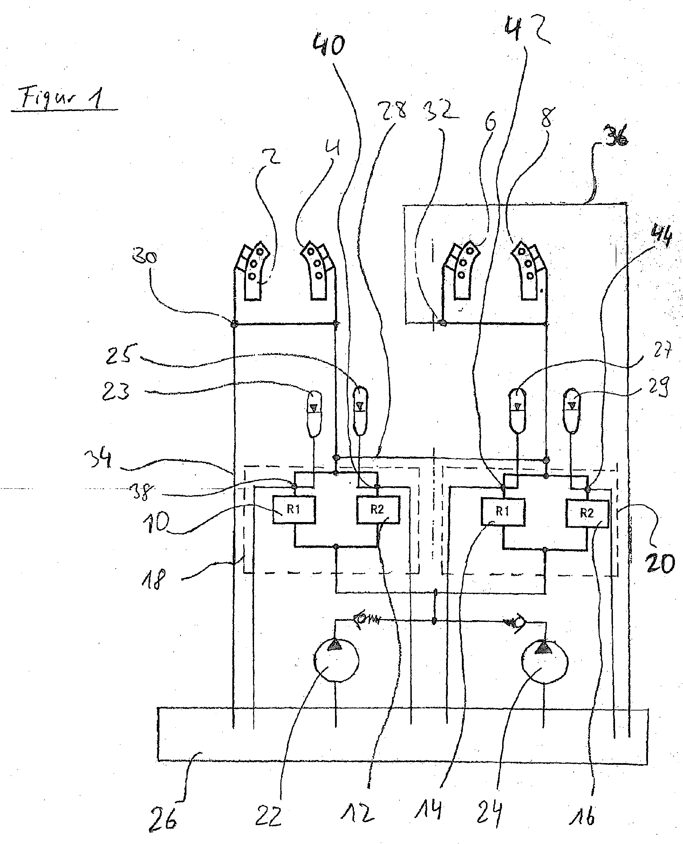

Fig. 1 eine schematische Darstellung der bevorzugten Ausführungsform der Scheibenbremsanlage für zwei Bremskreise einer Fördermaschine oder Förderhaspels;

In der Fig. 1 ist die schematische Darstellung einer bevorzugten Ausführungsform der Scheibenbremsanlage für zwei Bremskreise einer Fördermaschine oder eines Förderhaspels dargestellt. Zu erkennen sind dabei die schematischen Bremszangen 2 und 4 eines ersten Bremskreises sowie die schematischen Bremszangen 6 und 8 eines zweiten Bremskreises der Fördermaschine bzw. Förderhaspels. Wie zu erkennen ist, sind die Bremszangen 2, 4, 6 und 8 jeweils mit drei als Kreise dargestellten Bremszangen versehen, wobei auch jede andere Anzahl von Bremszangen pro Bremsständer denkbar ist. Die Zuordnung der Bremszangen auf den Bremsständern zu Bremskreisen ist letztlich beliebig.

Wie der Fig. 1 weiterhin zu entnehmen ist, werden die Bremszangen 2, 4 und 6, 8 der Anlage jeweils von zwei redundanten Regelkreisen 10, 12 sowie 14, 16 versorgt, wobei beide Regelkreise 10, 12 und 14, 16 jeweils in einer durch die gestrichelten Linien schematisch dargestellten Regeleinheiten 18 und 20 zusammengefasst sind, die sowohl die hydraulischen Komponenten, wie auch die jeweils dazugehörige Steuerungselektronik (nicht dargestellt) enthalten. Wie weiterhin zu erkennen ist, versorgen die redundanten Pumpen 22 und 24 (1x aktiv, 1x Stand By) die Regelkreise 10, 12 und 14, 16 mit dem notwendigen Betriebsdruck; bei Sicherheitsbremsung und in der Regel stillstehenden Pumpen erfolgt eine Erhöhung des Betriebsdruckes in der Regelphase dann durch Druckspeicher 23, 25, 27 und 29.

Zum Anheben der jeweiligen Bremsbeläge arbeitet die aktive Pumpe (z.B. 22), optional kurzzeitig unterstützt durch die Stand By Pumpe (z.B. 24) bei voller Kapazität, optional unterstützen dabei die Druckspeicher (23, 25, 27 und 29) der Regelkreise. Wenn der Betriebsdruck erreicht wurde, wird der Pumpenstrom bis auf einen Wert reduziert, der diesen Betriebsdruck aufrechterhält. Bei diesem vorherrschenden Betriebsdruck sind in den Bremszangen vorgesehen Federelemente (nicht dargestellt), die auf die Bremsbeläge in Richtung der Bremsscheiben wirken, komprimiert, so dass die Bremsbeläge vollständig von den Bremsscheiben abgehoben sind und einen minimalen Spalt zwischen Bremsbacken und Bremsscheiben bilden. Wie zu erkennen ist, sind beide Regeleinheiten 18 und 20 dabei auf einem Hydraulikölreservoir 26 angeordnet.

Die Regeleinheiten 18 und 20 sind, wie der Fig. 1 ebenfalls zu entnehmen ist, über eine Leitung 28 miteinander koppelbar, vorzugsweise durch eine (nicht dargestellte) Kugelhahn-Kombinationen, so dass z.B. bei Ausfall der Regeleinheit 18 die Anlage mit der anderen Regeleinheit 20 weiterbetrieben werden kann.

Schließlich ist der Fig. 1 auch noch zu entnehmen, dass an jeder Bremszangenpaarung 2, 4 und 6, 8 Ölablassventileinheiten 30, 32 vorzusehen, zur schrittweisen Auflegung der Bremsbeläge auf die Bremsscheiben, mit voller Bremskraft oder Teilbremskraft über Druckbegrenzungsventile in der Leitungen 34 und 36 zum Tank 26 ggf. als Backup- System.

Die Ölablassventileinheiten 30, 32 der Anlage sind derart ausgelegt, dass im Falle einer Notfall- bzw. Sicherheitsbremsung die Öläblassventile 30, 32 geöffnet werden und die Bremsbeläge die Bremsscheiben berühren. Kombinationen 38, 40, 42 und 44 aus Proportional-Wegeventilen, Proportional-Druckventilen oder anderen Regelventilen gleicher Funktion in jedem Regelkreis 10, 12, 14 und 16 steuern den Ölstrom und damit den für die gewünschte Verzögerung eingestellten Druck auf die Bremszangen 2, 4, 6 und 8. Dies wird erreicht, indem Öl aus den Regelkreisen 10, 12, 14 oder 16 zur Druckabsenkung im Regelkreis in das Reservoir 26 abgelassen wird oder aber der Druck im Regelkreis 10, 12, 14 oder 16 durch Ölzufluss durch zugehörige Drückspeicher 23, 25, 27 und 29, erhöht wird. Der jeweils eine Regelkreis 10 und 14 jeder Regeleinheit 18 und 20 dient dabei als Primärregelkreis, während der jeweils andere Regelkreis 12 oder 16 als "Hot Stand By" geschlossen bleibt. Im Falle, das einer der Primärregelkreise 10 oder 14 ausfällt, wird dieser geschlossen, wobei der Öldruck in diesem Regelkreis nicht unter den von dem jeweiligen Drucksteuerungsventil der Kombinationen 38, 40, 42 und 44 vorgegebenen Druck fallen kann. Der jeweilige Sekundärregelkreis 12 oder 16 übernimmt in dem Fall die Drucksteuerfunktion und stellt den geschlossenen Kreis zur definierten Verzögerung sicher.

Das Funktionieren der Steuerung des vollständig geschlossenen Druckkreislaufes der Notfallbremsung in jedem primären Regelkreis 10 und 14 und sekundären Regelkreis 12 und 16 wird überwacht von einem Geschwindigkeitsregelungssystem (nicht dargestellt) an der Anlage, so dass sichergestellt ist, dass der Öldruck in den Bremselementen 2, 4, 6 und 8 so gehalten wird, dass er der eingestellten Verzögerungsrampenfunktion folgt.

## Patentansprüche

1. Scheibenbremsanlage für Fördermaschinen und Förderhaspel, die mit zumindest zwei hydraulischen Bremskreisen versehen ist, wobei jedem Bremskreis zumindest eine Bremszange mit zugehörigen Bremsbelägen zugeordnet ist, **dadurch gekennzeichnet, dass** pro Bremskreis zwei redundante, aktive Regelkreise (10, 12, 14, 16) vorgesehen sind.

2. Scheibenbremsanlage nach Anspruch 1, **dadurch gekennzeichnet, dass** die jeweiligen Regelkreise (10, 12, 14, 16) eines Bremskreises redundant in einer Regeleinheit (18, 20), einschließlich der dazugehörigen Steuerelektronik, zusammengefasst sind.

3. Scheibenbremsanlage nach Anspruch 2, **dadurch gekennzeichnet, dass** die jeweiligen Regelkreise (10, 12, 14, 16) eines Bremskreises je einen Druckspeicher (23, 25, 27, 29) aufweisen.

4. Scheibenbremsanlage nach einem der vorhergehenden Ansprüche, **dadurch gekennzeichnet, dass** zur Druckerzeugung zwei redundante Pumpen (22, 24) für alle Bremskreise der Anlage vorgesehen sind.

5. Scheibenbremsanlage nach einem der Ansprüche 2 bis 4, **dadurch gekennzeichnet, dass** die Regeleinheiten (18, 20) der jeweiligen Bremskreise miteinander koppelbar sind.

6. Scheibenbremsanlage nach einem der vorhergehenden Ansprüche, **dadurch gekennzeichnet, dass** an jedem Bremskreis zusätzlich Ölablassventileinheiten (30, 32) vorgesehen sind.

7. Scheibenbremsanlage nach Anspruch 6, **dadurch gekennzeichnet, dass** an jedem Bremskreis in Verbindung mit den Ölablassventileinheiten (30, 32) Druckbegrenzungsventile vorgesehen sind.

## Claims

1. A disk brake system for hoisting machines and winches, equipped with at least two hydraulic brake circuits, wherein to each brake circuit at least one brake caliper with associated brake pads is allocated, **characterized in that** per brake circuit two redundant, active control circuits (10, 12, 14, 16) are provided.

2. The disk brake system according to claim 1, **characterized in that** the respective control circuits (10, 12, 14, 16) of a brake circuit are combined redundantly in a control unit (18, 20), including the associated control electronics.

3. The disk brake system according to claim 2, **characterized in that** the respective control circuits (10, 12, 14, 16) of a brake circuit each have a pressure reservoir (23, 25, 27, 29).

4. The disk brake system according to any of the preceding claims, **characterized in that** for generating pressure two redundant pumps (22, 24) are provided for all brake circuits of the system.

5. The disk brake system according to any of the claims 2 to 4, **characterized in that** the control units (18, 20) of the respective brake circuits can be mutually coupled.

6. The disk brake system according to any of the preceding claims, **characterized in that** on each brake circuit oil-release valve units (30, 32) are provided additionally.

7. The disk brake system according to claim 6, **characterized in that** on each brake circuit pressure limiting valves are provided in connection with the oil-release valve units (30, 32).

## Revendications

1. Système de frein à disque pour machines de levage et treuils, équipé avec au moins deux circuits de frein hydraulique, dans lequel au moins un étrier de frein avec des tampons de freins associés est alloué à chaque circuit de frein, **caractérisé en ce que** deux circuits de commande actifs redondants (10, 12, 14, 16) sont prévus par circuit de frein.

2. Système de frein à disque selon la revendication 1, **caractérisé en ce que** les circuits de commandes respectifs (10, 12, 14, 16) d'un circuit de frein sont combinés de manière redondante dans une unité de commande (18, 20), comprenant l'électronique de commande associée.

3. Système de frein à disque selon la revendication 2, **caractérisé en ce que** les circuits de commande respectifs (10, 12, 14, 16) d'un circuit de frein comprennent chacun un réservoir de pression (23, 25, 27, 29).

4. Système de frein à disque selon l'une quelconque des revendications précédentes, **caractérisé en ce que** deux pompes redondantes (22, 24) pour produire la pression sont fournies pour tous les circuits de frein du système.

5. Système de frein à disque selon l'une quelconque des revendications 2 à 4, **caractérisé en ce que** les unités de commande (18, 20) des circuits de freins respectifs peuvent être couplées les unes avec les autres.

6. Système de frein à disque selon l'une quelconque des revendications précédentes, **caractérisé en ce que**, sur chaque circuit de frein, des unités de clapet de libération d'huile (30, 32) sont fournies en plus.

7. Système de frein à disque selon la revendication 6, **caractérisé en ce que**, sur chaque circuit de frein, des clapets de limitation de pression sont fournis en connexion avec les unités de clapet de libération d'huile (30, 32).
